# EUROPÄISCHE PATENTSCHRIFT

(11) **EP 0 513 953 B1**
(45) Veröffentlichungstag und Bekanntmachung des Hinweises auf die Patenterteilung: **04.09.1996**
(21) Anmeldenummer: 92250117.6
(22) Anmeldetag: 11.05.1992
(51) Int. Cl.: G05D 23/30, F03G 7/06

(54) **Thermostat-Ventil**
Thermostat-valve
Vanne thermostatique

(30) Priorität: 11.05.1991 DE 4115799
(43) Veröffentlichungstag der Anmeldung: 19.11.1992
(73) Patentinhaber: Riedel, Manfred, Dr.-Ing., D-10243 Berlin (DE)
(72) Erfinder: Riedel, Manfred, Dr.-Ing., O-1017 Berlin (DE); Schoof, Peter, Dipl.-Ing., O-1034 Berlin (DE)
(74) Vertreter: Christiansen, Henning, Dipl.-Ing.

(56) Entgegenhaltungen:
- EP-A- 0 139 586
- WO-A-82/04142
- DE-A- 1 673 476
- DE-A- 3 517 999
- DE-B- 1 798 294
- DE-U- 8 620 719
- DE-U- 8 621 633
- FR-A- 2 179 952
- US-A- 4 739 925

## Beschreibung

Die Erfindung betrifft eine Thermostatventilanordnung der im Oberbegriff des Anspruchs 1 angegebenen Art.

Thermostat-Ventile der vorgenannten Gattung gehören zu den wichtigen Steuerungsarmaturen für die Heizungstechnik. Sie bestehen im wesentlichen aus einem Heizkörperventil, das einen Thermostat-Aufsatz trägt. Dieser Aufsatz enthält ein thermostatisches Arbeitselement, das gleichzeitig als Fühler und als Stellglied wirksam wird. Zu diesem Zweck besitzen bekannte Thermostataufsätze als Arbeitselemente abgeschlossene, ortsfest angeordnete Behälter, die mit einem Dehnstoff oder einer Dampf-Flüssigkeits-Mischung gefüllt sind. Mit dem bei Temperaturänderungen mit Volumenänderungen reagierenden Behälterinhalt ist der Ventilstößel des Heizkörperventils als Stellglied direkt verbunden. Das Stellglied kann durch Drehung des Aufsatzes gegen die Wirkung einer Feder vorgespannt werden, so daß erst bei einer bestimmten Volumenänderung eine Ventilreaktion einsetzt, durch die der Volumenstrom des Wärmeträgers durch den Heizkörper variiert wird. Diese Volumenänderung wird durch die sich ändernde Temperatur des Raumes, in dem sich der entsprechende Heizkörper befindet, bewirkt.

Nachteilig bei dieser Art von Thermostat-Ventilen ist, daß die Temperatur in der Umgebung des Thermostat-Ventils in den seltensten Fällen mit der zu regelnden Raumtemperatur übereinstimmt. Dies ergibt sich daraus, daß beispielsweise durch Wärmeleitung die Temperatur des durch den Heizkörper strömenden Mediums der Fühler des Thermostat-Ventils zusätzlich erwärmt wird.

Zur Verbesserung der Regelfähigkeit der gesamten Anlage wird deshalb die Raumtemperatur separat erfaßt und mittels einer elektrischen Größe dem Thermostat-Ventil zugeführt. Dadurch wird ein spezielles Heizelement erwärmt, dessen abgegebene Wärmemenge die gewünschte Volumenänderung innerhalb des Arbeitselements zwecks Ventilverstellung bewirkt. In Verbindung mit einer Schalteinrichtung kann eine Nachtabsenkung der Raumtemperatur erreicht werden.

In diesem Zusammenhang ist aus der DE-OS 26 25 421 ist ein Thermostataufsatz für ein Heizkörperventil bekannt, bei dem das Arbeitselement außen an seiner, dem Drehgriff zugewandten, Stirnseite ein elektrisches Heizelement trägt. Dieses Heizelement ist als Widerstandsschicht auf einer mit einem Deckelring des Arbeitselements verbundenen Platte angeordnet. Die vorgeschlagene Anordnung dient der Nachtabsenkung der Raumtemperatur und benötigt mehr als 1 Watt elektrische Leistung, um die Raumtemperatur um etwa 6 bis 8°C abzusenken.

Weiterhin ist aus der DD-PS 272 907 eine Vorrichtung zur Verbrennungsregelung feststoffbefeuerter Wärmeerzeuger bekannt, bei der ein an sich bekannter Feuerzugregler mit einer Dehnungspatrone ausgerüstet ist, die durch eine zusätzliche Wärmequelle thermisch beaufschlagt wird, wobei die elektrisch ansteuerbare Wärmequelle in Abhängigkeit von der Temperatur der zu beheizenden Räume in Funktion gesetzt wird. Die Verbindung der zylindrisch ausgebildeten Dehnungspatrone mit der auf einer Platte montierten Wärmequelle erfolgt von außen im Bereich des Steuerkolbenlagers der Dehnungspatrone durch eine Preßverbindung. Aufgrund der starken Wärmeableitung über Kesselbauteile müssen etwa 15 Watt Steuerleistung aufgebracht werden, um eine verwertbare Steuerbewegung des Kesselzugreglers zu erzeugen.

Darüberhinaus ist aus der DE-OS 35 00 278 eine Thermostatsteuerung mit einem Dehnstoffelement bekannt, die vorzugsweise für Fußleistenheizungen benutzbar ist. Der zylindrische Hüllkörper des Dehnstoffelements trägt einen elektrischen Heizkörper, der in Form einer käfigartigen Widerstandsanordnung ausgebildet und um das Gehäuse des Dehnstoffelements herum angeordnet ist. Um gleichzeitig der Umgebungsluft Zutritt zum Dehnungselement zu verschaffen, sind die Heizelemente als länglich geformte Widerstände ausgebildet, deren Längsachse mit der Längsachse des Gehäuses übereinstimmt. Im zusammenwirken mit der Umgebungsluftals Regelgröße und einer Änderungsmöglichkeit der Regelebene durch Stromsteuerung in der Zusatzheizung läßt sich das Heizungssystem stufenlos regeln. Aufgrund der Gestaltung des Widerstandsnetzwerks ist, wenn auch nicht explizit angegeben, für die Regelung des Heizungssystems eine erhebliche elektrische Steuerleistung erforderlich.

### Eine ähnliche Vorrichtung ist in DE-U-86 20 719 beschrieben.

Weiterhin ist aus der DE-OS 30 00 388 ein Verfahren und eine Vorrichtung zum Verbessern der Wirkung eines Thermostaten bekannt, bei dem zum Erreichen einer Zeitsteuerung (Nachtabsenkung) während des Betriebs einer Warmwasserheizung der Thermostat mit einer elektrischen Zusatzheizung ausgerüstet ist. Verwendet wird dazu eine schmale Heizpatrone, die mit einer ihrer Stirnseiten an dem Dehnungselement des Thermostaten anliegt. Aufgrund der geringen Kontaktfläche zwischen Heizpatrone und Dehnungselement ist eine größere elektrische Heizleistung erfordelich, um die zum Steuern benötigte Wärmemenge zuzuführen.

Schließlich ist aus der DE-OS 35 17 999 eine Thermostat-ventilanordnung der eingangs genannten Gattung bekannt, bei der eine elektrische Heizvorrichtung auf einem zwischen Dehnstoffkörper und Heizkörperventil zur Kraftübertragung vorgesehenen Hubkolben angeordnet ist. Hierbei erfolgt die Wärmeübertragung zwische Heizspule und Dehnstoffkörper aber vorwiegend über eine Erwärmung der Umgebungsluft, welche ihrerseits den Dehstoffkörper über dessen äußere Oberfläche erwärmt. Zwischen Heizspule und Hubkolben befindet sich dagegen ein wärmeisolierend wirkender Spulenträger. Bei dieser Anordnung ist nachteilig, daß nur ein Bruchteil der von der Heizspule abgegebenen Wärmeenergie zur Ausdehung des Dehnstoffkörpers beiträgt und deshalb eine nicht unbeträchtliche elektrische Leistung bereitgestellt werden muß.

Alle vorbeschriebenen Lösungen für in Heizungssystemen einzusetzenden thermostatischen Steuereinrichtungen weisen damit den gemeinsamen Nachteil auf, daß aufgrund der konstruktiven Anordnung der elektrischen Zusatzheizungen der für eine ausreichende Stellbewegung erforderliche Wärmeeintrag in den Dehnstoff des thermostatischen Arbeitselements nur mit größeren elektrischen Heizleistungen möglich ist. Das folgt aus der Tatsache, daß bei Anbringen der zusätzlichen Heizvorrichtungen an der äußeren Begrenzung des thermostatischen Arbeitselements nur ein geringer Teil der zugeführten Wärmemenge als Wärmestrom in den Dehnstoff des thermostatischen Arbeitselements fließen kann, während die restliche Wärmemenge durch Strahlung oder Wärmeleitung an die Umgebung abgegeben wird. Diese Tatsache ist besonders dann energetisch kaum vertretbar und im Hinblick auf die damit im Zusammenhang stehenden bei den entsprechenden Verkabelungsarbeiten benötigten größeren Kabelquerschnitten besonders kostenintensiv, wenn eine größere Anzahl von Heizkörpern, beispielsweise in einem Hochhaus, durch derartige Anlagen geregelt werden sollen. Darüberhinaus besitzen alle vorstehend beschriebenen Systeme keine Sicherheitsmöglichkeit für den Fall, daß durch einen Fehler im Steuersystem ein Dauerstrom durch die Zusatzheizelemente fließt und dadurch eine Überheizung des Thermostaten erfolgt, was zu einer unberechtigten Abschaltung des entsprechenden Heizkörpers führen würde.

Ausgehend von den Mängeln des bekannten Standes der Technik liegt der Erfindung die Aufgabe zugrunde, eine einfache konstruktive Lösung für die Anordnung von Zusatzheizungen in Steuerungen für Thermostat-Ventile der eingangs genannten Gattung zu finden, bei der die zur Ventilsteuerung erforderliche zusätzliche elektrische Heizleistung gering ist.

Diese Aufgabe wird mit den kennzeichnenden Merkmalen des Anspruchs 1 gelöst.

Der Erfindung schließt die Erkenntnis ein, daß energetische Vorteile und Verbesserungen im Hinblick auf einen zusätzlichen Wärmeeintrag in das thermostatische Arbeitselement eines Thermostat-Ventils erzielbar sind, wenn innerhalb des Thermostat-Ventils konstruktiv vorhandene Wärmeleitungsanordnungen möglichst vollständig genutzt werden können und dabei gleichzeitig eine unerwünschte Wärmeabgabe durch Konvektion oder Wärmestrahlung vermieden wird. Dies ist durch eine Ausnutzung von im Inneren des thermostatischen Arbeitselement des Thermostataufsatzes des Thermostat-Ventils befindlichen Konstruktionsteilen und den damit erfolgenden internen Wärmekontakt auf einfache Weise möglich. Damit wird nicht der im normalen - unbeheizten - Betrieb des Thermostaten übliche Weg durch Ausnutzung von Konvektion benutzt, um den Dehnungskörper zu beeinflussen, sondern der bei direkter Energieeinspeisung ökonomischere Weg der Wärmeleitung über metallische Brücken.

Erfindungsgemäß wird deshalb die Wärmeleitfähigkeit des durch das thermostatische Arbeitselement des Thermostat-Ventils betätigte Ventilstößels zum unmittelbaren Wärmeeintrag in den Dehnstoff des thermostatischen Arbeitselements benutzt. Diese Lösung hat den wesentlichen Vorteil, daß nahezu die gesamte, zusätzlich zu Steuerungszwecken benötigte Wärmemenge am Arbeitselement wirksam gemacht werden kann. Mögliche Wärmeverluste durch Strahlung oder Wärmeleitung, die den Wärmeeintrag in das thermostatische Arbeitselement negativ beeinflussen, treten nur an der thermischen Verbindungsstelle zwischen der zusätzlichen Heizvorrichtung und dem Ventilstößel des Thermostat-Ventils auf. Diese Wärmeverluste können jedoch auf einfache Weise durch die konstruktive Gestaltung der Verbindungsstelle hinsichtlich eines guten Wärmeübergangs sehr klein gehalten werden, zumal der zum Wärmeeintrag benutzte Ventilstößel aus einem gut wärmeleitenden Material besteht und eine relativ geringe Oberfläche besitzt. Diese Eigenschaften tragen auf vorteilhafte Weise zur Erhöhung des angestrebten energetischen Effekts bei.

Besonders vorteilhaft ist es, die zusätzliche Heizvorrichtung als elektrisch ansteuerbares Widerstandsnetzwerk, das aus mindestens einem Widerstand besteht, auszubilden und mittels einer geeigneten separaten Befestigungsvorrichtung am Ventilstößel in wärmeleitendem Kontakt zu befestigen.

Elektrische Widerstände in herkömmlicher Bauweise können aufgrund ihrer meist zylindrischen Form günstig an dem Ventilstößel des Thermostat-Ventils befestigt werden. Nach einer bevorzugten Ausführungsform der Erfindung wird zur Herstellung einer gut wärmeleitenden Verbindung zwischen Ventilstößel und Widerstand als Befestigungsvorrichtung ein metallisches Klemmstück benutzt, das aus thermisch gut leitendem Material besteht und sowohl den (ebenfalls thermisch leitend mit dem Gehäuse des das thermostatische Arbeitselement bildenden) Dehnkörper als auch das elektrische Heizelement diese umgreifende kontaktiert.

Das Klemmstück besteht dabei bevorzugt aus mindestens zwei schellenartigen Bereichen, die durch stegartige Bereiche miteinander verbunden sind. Damit weisen die Klemmstück-Abschnitte besit-zen jeweils eine Durchgangsöffnung, die, angepaßt an die Außenabmessungen von Ventilstößel und Widerständen, vorzugsweise im wesentlichen hohlzylindrisch ausgebildet ist. Damit sind diejenigen Oberflächenbereiche, die sonst zur Wärmeabstrahlung neigen, direkt in thermisch leitendem Kontakt mit dem Dehnkörper. Damit stellt sich bei dem elektrischen Heizelement im Betrieb nur eine geringe Übertemperatur ein, woraus eine energiesparene Arbeitsweise resultiert.

Für die Montage der zusätzlichen Heizvorrichtung nach einer bevorzugten Ausführungsform der Erfindung, bei der das Klemmstück aus zwei Abschnitten besteht, wird auf einfache Weise der Ventilstößel des Thermostat-Ventils durch die eine Durchgangsöffnung und der Heizwiderstand durch die zweite Durchgangsöffnung des Klemmstücks geschoben. Bevorzugt weist der Steg des Klemmstücks einen schmalen, insbesondere mittig angeordneten Schlitz auf, der in Richtung der längsgerichteten Symmetrieebene des Klemmstücks verläuft, so daß bei entsprechendem Untermaß der inneren hohlzylindrischen Querschnitte ein gute Klemmwirkung mit entsprechend niedrigem Wärmeübergangswiderstand erzielt werden kann. Bei der vorbeschriebenen Anordnung liegen die Längsachsen von Widerstand und Ventilstößel parallel, wenn die zusätzliche Heizvorrichtung im Thermostat-Ventil montiert ist. Nach einer bevorzugten Ausführungsform der Erfindung weist die Befestigungsvorrichtung eine im Querschnitt achtförmige Konfiguration auf.

Bei einer anderen bevorzugten Ausführung der Erfindung besteht die Befestigungsvorrichtung als Klemmstück aus drei flächenförmigen Abschnitten geringer Höhe, die durch Stege miteinander verbunden sind. Die einzelnen Abschnitte besitzen jeweils eine Durchgangsöffnung in der zuvor beschriebenen Form. Dadurch besteht die Möglichkeit, das Widerstandsnetzwerk der zusätzlichen Heizvorrichtung aus zwei elektrischen Widerständen zu bilden und dadurch gegebenenfalls dem Thermostat-Ventil eine weitere Steuergröße aufzuschalten. Das Klemmstück weist nach dieser Ausführung eine im wesentliche sternförmige Konfiguration auf. Auf diese Weise können in einer "Matrix" aus gut leitendem Material eine Anzahl von Widerstandselementen um den Stößel herum angeordnet sein.

Um eine gute Wärmeleitung und damit einen guten Wärmeübergang von dem wärmeerzeugenden Widerstand der zusätzlichen Heizvorrichtung zum Ventilstößel zu erreichen, besteht die Befestigungsvorrichtung aus Kupfer.

Bei einer anderen günstigen Variante der Erfindung ist die Heizvorrichung als Solenoid unmittelbar - oder unter Einschluß einer eine elektrische Isolierung für die benutzte Niederspannung gegenüber dem metallischen Stößel sicherstellende dünne Kunststoff- oder Lackschicht - auf dem zylindrischen Stößel aufgebracht. Hierbei (und gegebenenfalls auch bei der zuvor beschriebenen Ausführung) wird bevorzugt der Außenumfang mit einer thermischen Isolierung (wie Styropor) versehen. Es ist ersichtlich, daß auch bei dieser Ausführung nahezu die gesamte elektrisch erzeugte Wärmeenergie unmittelbar der Verstellung des Dehnkörpers zugute kommt.

Bei einer weiteren vorteilhaften Weiterbildung der Erfindung besteht das Widerstandsnetzwerk der zusätzlichen Heizvorrichtung aus einem sogenannten Kaltleiter. Diese elektrischen Widerstandselemente sind haben einen positiven Temperaturkoeffizienten. Hier bevorzugte Ausführungen haben ein nichtlineares Verhalten in der Weise, daß sie zunächst über einen Bereich niedriger Temperaturen einen nahezu konstanten Widerstandswert beibehalten. Bei Überschreiten eines bestimmten Wertes der Eigentemperatur nimmt der Widerstandswert des Kaltleiters dann aber sprunghaft um mindestens eine Zehnerpotenzen zu. Diese Eigenschaft kann genutzt werden, um einen Überlastschutz für die zusätzliche Heizvorrichtung bzw. die Steuerungselektronik für das Thermostat-Ventil mit besonderen schaltungstechnischen Aufwand zu realisieren. Wird nämlich bei einer bestimmten Raumtemperatur ein falscher Stromwert für die zusätzliche Heizvorrichtung vorgegeben bzw. fließt durch einen elektrischen Kurzschluß in einem Anlagenteil der Steuerung ein zu großer Strom, so wird der Strom, und damit auch die Erwärmung durch die Eigenschaften des Kaltleiters schadensverhindernd begrenzt.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
Figur 1 eine schematisierte Darstellung einer bevorzugten Ausführungsform eines Thermostat-Ventils mit erfindungsgemäßer Steuerung,
Figur 2 eine schematisierte Ansicht der bevorzugten Befestigungsform für die zusätzliche Heizvorrichtung,
Figur 3 eine Draufsicht der in Figur 2 verwendeten Befestigungsvorrichtung,
Figur 4 eine schematisierte Ansicht einer weiterhin möglichen Form der Befestigung für die zusätzliche Heizvorrichtung,
Figur 5 eine Draufsicht auf die in Figur 4 dargestellte Form der Befestigung,
Figur 6 ein Diagramm mit der schematischen Darstellung der Abhängigkeit des Widerstands des elektrischen Kaltleiters von der Umgebungstemperatur sowie
Figur 7 eine Variante einer Ausführung gemäß Figur 3 mit mehreren im Bereich des Stößels vorgesehenen Heizelementen.

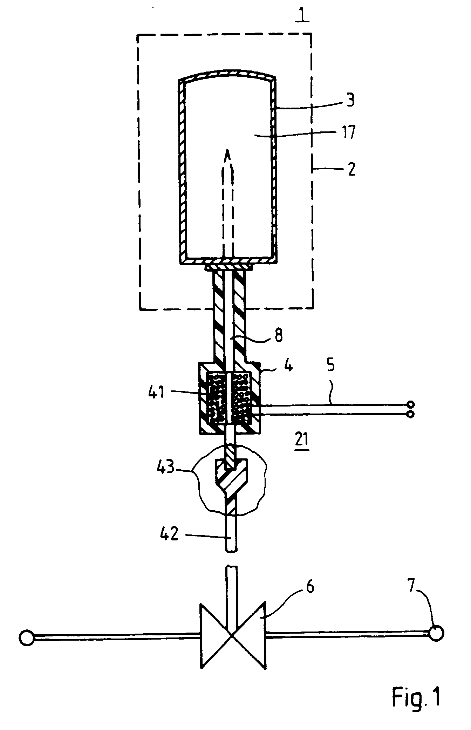

Die in Figur 1 schematisch - und teileise geschnitten - wiedergegebene vorteilhafte Ausführungsform der erfindungsgemäßen Thermostat-Ventilanordnung 1 besteht im wesentlichen aus einem zu steuernden Heizkörperventil 6 und einem Thermostataufsatz 2. Die Verbindung zwischen den Bauteilen 2 und 6 wird durch einen thermisch leitenden Ventilstößel 8 hergestellt, der an einem Ende den Ventilteller des Heizkörperventils 6 trägt und dessen gegenüberliegendes Ende am metallischen Körper oder innerhalb eines einen Dehnkörper bildenden thermostatischen Arbeitselement 3 angebracht ist. Im Normalbetrieb ohne Beheizung wird das Ventil 6 durch das Arbeitselment verstellt.

Das am oder im Inneren des thermostatischen Arbeitselements 3 angeordnete Ende des Ventilstößels 8 befindet sich in thermischem Wirkkontakt mit dem dort vorhandenen Dehnstoff 17. Im Bereich des im Inneren des Thermostat-Ventils 1 zwischen Thermostataufsatz 2 und Heizkörperventil 6, technologisch bedingt, vorhandenen Freiraum 21 wird eine zusätzliche Heizvorrichtung 4 an dem Ventilstößel 8 angeordnet. Der elektrische Anschluß 5 der Heizvorrichtung 4 ist durch die Wandung des Thermostat-Ventils 1 nach außen geführt.

Die elektrische Heizvorrichtung 4 besteht in der Ausführung gemäß Figur 1 aus einigen Lagen von Widerstandsdraht, wie beispielsweise Konstantandraht, der - getrennt höchstens durch eine folienartige Schicht, welche einen Kurzschluß im Bereich der verwendeten Niederspannung verhindert, von dem metallischen Ventilstößel 8 getrennt ist. Damit besteht im wesentlichen unmittelbar leitender Wärmekontakt zwischen Heizwicklung und dem metallischen Teil des Dehnungsgefäßes. Um die Wärmeverluste - und damit die Nutzung der zugeführten elektrischen Energie noch zu verbessern, ist eine Schicht 41 aus thermischem Isoliermaterial, wie beispielsweise Styropor, vorgesehen, welches eine Wärmeabgabe durch Konvektion im wesentlichen verhindert. Um die Wärmeabgabe noch weiter zu reduzieren, ist der dem Ventil zugewandte Teil 42 des Stößels aus einem wenig wärmeleitenden Material, wie beispielsweise Kunststoff, gefertigt. Gegebenenfalls ist für diesen Zwecke - bei geteiltem Stößel 8 - auch ein entsprechendes kurzes, in der Nähe des Heizelements 4 bei der Trennstelle 32 vorgesehenes kurzes Kupplungsstück aus Kunststoff günstig.

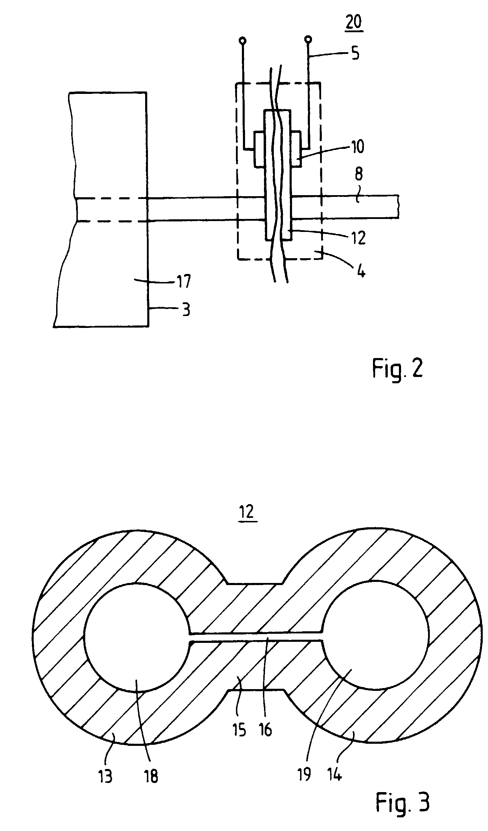

In Figur 2 ist eine andere vorteilhaften Ausführung der erfindungsgemäßen Vorrichtung in Form der Befestigung der zusätzlichen elektrischen Heizvorrichtung 4 an dem Ventilstößel dargestellt. Die Heizvorrichtung 4 besteht aus hier aus einem Widerstandselement 20. Für die bevorzugte Ausführungsform wird als elektrischer Widerstand ein Kaltleiter 10 eingesetzt. Die Verbindung zwischen Kaltleiter 10 und dem Ventilstößel 8 wird mittels einer separaten Befestigungsvorrichtung in Form eines Klemmstücks 12 vorgenommen, dessen Ausgestaltung in Figur 3 dargestellt ist.

Das aus Kupfer bestehende Klemmstück 12 besitzt in vorteilhafter Weise eine im wesentlichen achtförmige Gestalt und besteht aus symmmetrischen Bereichen 13, 14, die im wesentlichen "8"-förmig ausgestaltet und durch im Zentrum durch einen Steg 15 miteinander verbunden sind. Die Abschnitte 13, 14 besitzen jeweils eine hohlyzylindrische Durchgangsöffnung 18, 19, durch welche zum einen der Kaltleiter 10 und zum anderen der Ventilstößel 8 gesteckt werden, um den zur Steuerung des Thermostat-Ventils 1 erforderlichen Wärmeeintrag in das thermostatische Arbeitselement 3 zu ermöglichen. Die Durchgangsöffnungen 18, 19 sind, an die Außenmaße von Ventilstößel 8 und Kaltleiter 10 angepaßt, im wesentlichen kreisförmig ausgebildet. Um gleichermaßen eine gute Klemmwirkung zu erzielen und die Montage des Kaltleiters 10 in das Klemmstück 12 bzw. die Montage des mit dem Kaltleiter 10 bestückten Klemmstücks 12 an den Ventilstößel 8 auf einfache Weise durchführen zu können, ist der die Abschnitte 13, 14 verbindende Steg 15 geschlitzt und die jeweilige Durchgangsöffnungen 18, 19 bezüglich der Außendurchmesser von Kaltleiter 10 und Ventilstößel 8 mit einem geringfügigen Untermaß versehen. Der schmale Schlitz 16 erstreckt sich zwischen den beiden Durchgangsöffnungen 18, 19 und verläuft in Richtung der Längsachse des Klemmstücks 12 und hält die Klemmwirkung durch Vorspannung aufrecht.

Der durch die so vorteilhafterweise erreichte Klemmwirkung zwischen Klemmstück 12 und Kaltleiter 10 einerseits und Ventilstößel 8 andererseits ist wesentliche Voraussetzung für einen guten und ausreichenden thermischen Wirkkontakt, um die durch den Kaltleiter 10 bei Stromdurchfluß entwickelte Wärmemenge über den Ventilstößel 8 in den Dehnstoff 17 des thermostatischen Arbeitselements 3 nahezu vollständig einbringen zu können.

Durch eine derartige Gestaltung der Verbindung des Kaltleiters 10 der zusätzlichen Heizvorrichtung 4 mit dem Ventilstößel 8 des Heizkörperventils 6 ist es beispielsweise möglich, mit, im Vergleich zu üblicherweise verwendeten Steuereinrichtungen, nur etwa 10 bis 20% der elektrischen Leistung den für eine ausreichende Stellbewegung des Heizkörperventils 6 erforderlichen Wärmeeintrag in das thermostatische Arbeitselement 3 zu bewirken. Der Wärmeeintrag erfolgt durch einen, der augenblicklichen Temperatur des zu beheizenden Raumes entsprechenden, elektrischen Strom.

Praktische Versuche ergaben, daß bei Verwendung von PTC-Widerständen als Kaltleiter mit R = 1,1 kΩ nur eine elektrische Heizleistung von P = 0,5 Watt aufgewendet werden mußte, um den für eine Steuerung des Heizkörperventils erforderlichen Ventilhub zu erreichen.

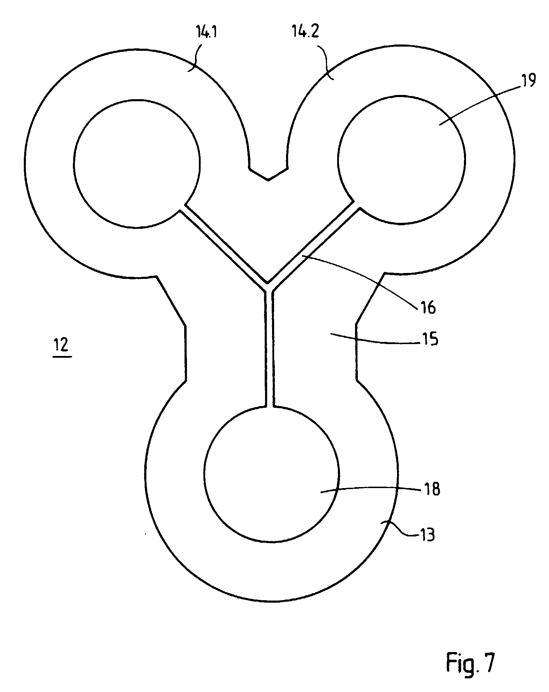

Eine weitere vorteilhafte Ausführungsform des Klemmstücks 12 ist Figur 7 dargestellt. Das Klemmstück 12 besitzt drei flächenförmig ausgebildete Abschnitte 13, 14.1, 14.2, die durch Stege 15 miteinander verbunden sind. Die Stege 15 sind ebenfalls zwecks Sicherung der erforderlichen Klemmwirkung geschlitzt. Das Klemmstück 12 besitzt eine im wesentlichen sternförmige Konfiguration und bietet auf vorteilhafte Weise die Möglichkeit, eine Heizvorrichtung mit mehr als einem Widerstandselement zu positionieren. Diese Form des Klemmstücks 12 bietet die Voraussetzung, gegebenenfalls eine zusätzliche Steuergröße auf das Thermostat-Ventil 1 aufzuschalten, falls es für eine optimale Betriebsführung des Heizungssystems erforderlich ist.

Neben den in den Figuren 2 und 7 dargestellten Ausführungsformen des Klemmstücks 12, bei denen die zylindrischen Heizelemente (die durch übliche Widerstandselemente, insbesondere mit innerem Keramikkörper, gebildet sein können) Achsenparallel zu dem Stößel 8 angeordnet sind, sind auch ringförmige Heizelemente denkbar, welche einen Ringkern bilden, der mit Widerstandsdraht bewickelt ist.

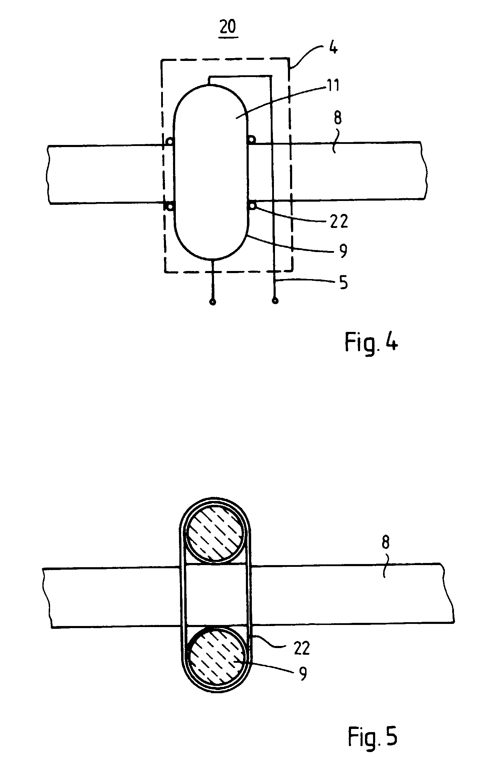

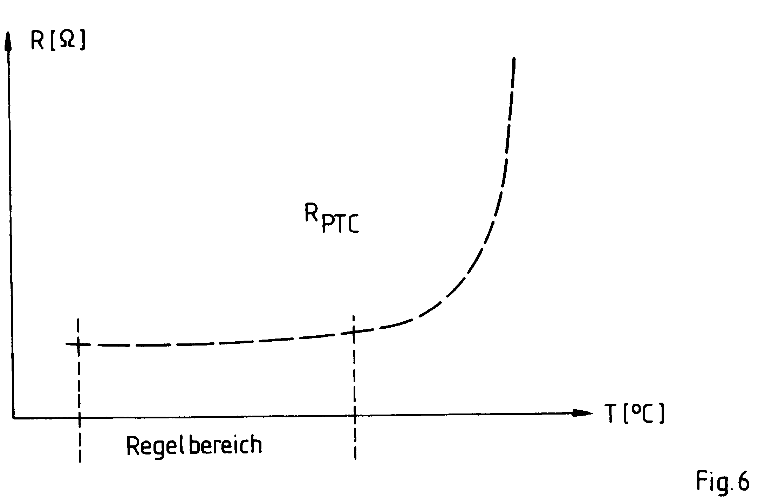

Eine derartige Ausführungsform der Befestigungsvorrichtung ist in den Figuren 4 und 5 dargestellt. Danach wird die Verbindung des toroidförmigen Widerstands 9 der zusätzlichen Heizvorrichtung 4 mit dem Ventilstößel 8 mittels einer aus Kupfer bestehenden kapselförmigen Schelle 11 hergestellt. Die Schelle 11 besteht aus einen, der Widerstandsform angepaßten Deckblech, an dem Haken 22 angebracht sind, mittels derer der Widerstand 9 bei der Montage fest gegen den zylindrischen Ventilstößel 8 gepreßt wird.

In Figur 6 ist das Widerstands-Temperatur-Diagramm eines in der bevorzugten Ausführungsform der Steuerung verwendeten Kaltleiters schematisch dargestellt. Die Eigenschaft des PTC-Kaltleiters, seinen elektrischen Widerstand ab einem bestimmten Wert der Umgebungstemperatur um mindestens eine Zehnerpotenz sprungartig zu erhöhen, wird auf vorteilhafte Weise ausgenutzt, die Steuerung für das Thermostat-Ventil vor thermischer Überlastung zu schützen.

Ein, z.B. durch einen Kurzschluß in der die zusätzliche Heizvorrichtung 4 ansteuernden Einheit des Heizungsregelungssystems hervorgerufener, zu großer Steuerstrom erwärmt den Kaltleiter 10 derart, daß er eine Temperatur erhält, die außerhalb seines vorbestimmtem Regelbereichs liegt. Die daraufhin eintretende Strombegrenzung durch Widerstandserhöhung des Kaltleiters verhindert Schäden in der elektrischen Schaltung.

Für praktische Anwendungsfälle ist das Thermostat-Ventil 1 mechanisch fest eingestellt und für eine Raumtemperatur von 25°C auf einen Ventilhub von 0,6 mm justiert. Der Drehstellantrieb des Ventils ist arretiert. Bei Raumtemperaturen <22°C wird das Thermostat-Ventil 1 durch die vorab beschriebene Steuerung gesteuert. Steigt die Raumtemperatur auf Werte >25°C, tritt der durch den Kaltleiter 10 bedingte Überlastschutz ein und das Thermostat-Ventil 1 wird nur durch die Temperatur der Raumluft gesteuert.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

## Patentansprüche

1. Thermostatventilanordnung (1), vorzugsweise für den Heizkörper einer Warmwasserheizung, bestehend aus
einem Ventil (6) und
einem einen Thermostaten (2) enthaltenden Steuerteil mit einem als Dehnkörper ausgebildeten Arbeitselement (3), das sowohl durch die Luft des zu beheizenden Raumes als auch durch eine zusätzliche elektrische Heizvorrichtung (4) thermisch beaufschlagbar ist und einen Stößel (8) aufweist, der mit seinem einen Ende mit dem Arbeitselement (3) verbunden ist und dessen anderes Ende mit einem Betätigungselement für das Ventil (6) in Wirkverbindung steht,
das in Richtung der Schließstellung des Ventils bewegt wird, wenn sich ein Dehnstoff (17) des Arbeitselements bei Erwärmung ausdehnt und der Stößel aus dem Arbeitselement herausbewegt wird,
**dadurch gekennzeichnet,**
daß die zusätzliche elektrische Heizvorrichtung (4) unmittelbar oder unter Einschluß eines Elements aus einem Material mit geringem Wärmewiderstand, in wärmeleitendem Kontakt, am Stößel (8) angeordnet ist,
wobei der Stößel (8) seinerseits mit dem Dehnstoff (17) in wärmeleitendem Kontakt steht.

2. Thermostatventilanordnung nach Anspruch 1, **dadurch gekennzeichnet,** daß der Bereich wärmeleitenden Kontakts zwischen der zusätzlichen Heizvorrichtung (4) und dem Stößel (8) eine Befestigungsvorrichtung (11, 12) als mechanisches Zwischenelement oder eine elektrische Isolierschicht einschließt, welche zur elektrischen Isolierung im Niederspannungsbereich ausgelegt ist.

3. Thermostatventilanordnung nach einem der Ansprüche 1 oder 2, **dadurch gekennzeichnet,** daß das einen geringen Wärmewiderstand aufweisende Element eine Befestigungsvorrichtung in Form einer Schelle (11) oder eines Klemmstücks (12) bildet, welche sowohl den Stößel (8) als auch die Heizvorrichtung (4) in einem Bereich seiner Längserstreckung mit einem Material kleinen Wärmewiderstands umgibt.

4. Thermostatventilanordnung nach einem der vorangehenden Ansprüche, **dadurch gekennzeichnet,** daß die Längsachsen von Stößel (8) und Heizvorrichtung (4) zueinander im wesentlichen parallel gerichtet sind und/oder daß die Heizvorrichtung in bezüglich einer zum Stößel radial gerichtete Fläche spiegelsymmetrisch ausgestaltet ist.

5. Thermostatventilanordnung nach einem der vorangehenden Ansprüche, **dadurch gekennzeichnet,** daß das einen geringen Wärmewiderstand aufweisende Element (12) einen Steg (15) aufweist, der insbesondere mit einem wesentlichen in Längsrichtung verlaufenden Schlitz (16) versehen ist.

6. Thermostatventilanordnung nach einem der vorangehenden Ansprüche, **dadurch gekennzeichnet,** daß eine erste Durchgangsöffnung (18) eines ersten Bereichs (13) des Klemmstücks (12) vom Stößel (8) durchquert wird und in einer zweiten Durchgangsöffnung (19) eines zweiten Bereichs (14) des Klemmstücks (12) ein Heizelement (10) der Heizvorrichtung (4) angeordnet ist.

7. Thermostatventilanordnung nach einem der vorangehenden Ansprüche, **dadurch gekennzeichnet,** daß der Stößel (8) in das Arbeitselement (3) hineinragt.

8. Thermostatventilanordnung nach einem der vorangehenden Ansprüche, **dadurch gekennzeichnet,** daß die elektrische Heizvorrichtung (4) ein Heizelement (10) aufweist, das aus einem Werkstoff besteht, dessen elektrischer Widerstand einen positiven Temperaturkoeffizienten aufweist.

9. Thermostatventilanordnung nach einem der vorangehenden Ansprüche, **dadurch gekennzeichnet,** daß die Heizvorrichtung (4) eine oder mehrere Lagen eines Widerstandsdrahts aufweist, der insbesondere an seiner Oberfläche mit einer dünnen Isolierschicht versehen ist.

10. Thermostatventilanordnung nach einem der vorangehenden Ansprüche, **dadurch gekennzeichnet,** daß die Heizvorrichtung (4) als mit einer isolierenden Oberflächenschicht versehenes Widerstandselement (20) mit zwei Anschlußdrähten zur verwendung in elektrischen Schaltungen, insbesondere als Widerstandselement mit keramischem Träger, ausgestaltet ist.

11. Thermostatventilanordnung nach einem der vorangehenden Ansprüche, **dadurch gekennzeichnet,** daß der Stößel (8) im Bereich zwischen Arbeitselement (3) und elektrischer Heizvorrichtung (4) aus einem thermisch gut leitendem Material und insbesondere in seinem übrigen Bereich aus einem thermisch schlecht leitendem Werkstoff, insbesondere Kunststoff, besteht.

## Claims

1. A thermostat valve arrangement (1), preferably for a hot-water heated radiator, comprising a valve (6) and a control component which has a thermostat (2) and an operating member (3) in the form of an expansion body, said control component being acted upon thermally by the air of the room to be heated and by an additional electric heating device (4) and having a push rod (8) whose one end is connected to the operating member (3) and whose other end is in operative connection with an actuating member for the valve (6), which is moved in the direction of the closed position of the valve when an expansion material (17) of the operating member expands upon heating and the push rod is moved out of the operating member, characterised in that the additional electric heating device (4) is arranged in thermal contact on the push rod (8) either directly or via a member made of a material of a low heat-resistance, the push rod (8) itself being in thermal contact with the expansion material (17).

2. A thermostat valve arrangement according to claim 1, characterised in that the thermal contact region between the additional heating device (4) and the push rod (8) includes a fixing device (11, 12) as a mechanical intermediate member or an electrical insulating layer, which is designed for electrical insulation in the low-voltage region.

3. A thermostat valve arrangement according to one of claims 1 or 2, characterised in that the element with a low heat-resistance is a fixing device in the form of a clip (11) or a clamping piece (12) which surrounds both the push rod (8) and the heating device (4) with a material of low heat-resistance, in a region of their length.

4. A thermostat valve arrangement according to one of the preceding claims, characterised in that the longitudinal axes of push rod (8) and heating device (4) are substantially parallel to one another and/or that the heating device is reflectionally symmetric with respect to a surface which is radially oriented relative to the push rod.

5. A thermostat valve arrangement according to one of the preceding claims, characterised in that the low heat-resistance element (12) has a crosspiece (15) which has, in particular, a slot (16) which substantially extends in the longitudinal direction.

6. A thermostat valve arrangement according to one of the preceding claims, characterised in that a first through-opening (18) of a first region (13) of the clamping piece (12) is traversed by the push rod (8), and that a heating element (10) of the heating device (4) is arranged in a second through-opening (19) of a second region (14) of the clamping piece (12).

7. A thermostat valve arrangement according to one of the preceding claims, characterised in that the push rod (8) projects into the operating member (3).

8. A thermostat valve arrangement according to one of the preceding claims, characterised in that the electric heating device (4) has a heating element (10) which is made of a material whose electrical resistance has a positive temperature coefficient.

9. A thermostat valve arrangement according to one of the preceding claims, characterised in that the heating device (4) has one or more layers of a resistive wire which, in particular, is provided with a thin insulation layer, on the surface thereof.

10. A thermostat valve arrangement according to one of the preceding claims, characterised in that the heating device (4) is constructed as a resistive element (20) which is provided with an insulating surface layer and has two connecting wires for use in electric circuits, more particularly as a resistive element with a ceramic carrier.

11. A thermostat valve arrangement according to one of the preceding claims, characterised in that in the region between the operating element (3) and the electric heating device (4) the push rod (8) is made of a good thermal conductor and, in particular is made of a thermally low-conductive material, in particular plastics, within the remaining region.

## Revendications

1. Agencement de vanne thermostatique (1), de préférence pour le radiateur d'un chauffage à eau chaude, constitué par une vanne (6) et par un élément de commande comportant un thermostat (2) et un élément de travail (3) réalisé sous forme de corps à dilatation et pouvant être sollicité thermiquement tant par l'air du local à chauffer que par un dispositif de chauffage électrique supplémentaire (4), et présentant un tiroir (8) qui est relié par l'une de ses extrémités à l'élément de travail (3) et dont l'autre extrémité se trouve en liaison d'action avec un élément d'actionnement pour la vanne (6), qui est déplacé en direction de la position de fermeture de la vanne lorsqu'une matière à dilatation (17) de l'élément de travail se dilate lors du réchauffement et que le tiroir est déplacé hors de l'élément de travail, caractérisé en ce que le dispositif de chauffage électrique supplémentaire (4) est agencé en contact conducteur de chaleur directement sur le tiroir (8), ou en incluant un élément d'un matériau d'une faible résistance thermique, et en ce que le tiroir (8) est à son tour en contact conducteur de chaleur avec la matière à dilatation (17).

2. Agencement de vanne thermostatique selon la revendication 1, caractérisé en ce que la région du contact conducteur de chaleur entre le dispositif de chauffage supplémentaire (4) et le tiroir (8) inclut un dispositif de fixation (11, 12) en tant qu'élément intermédiaire mécanique ou une couche d'isolation électrique qui est conçue pour l'isolation électrique dans la plage des basses tensions.

3. Agencement de vanne thermostatique selon l'une ou l'autre des revendications 1 et 2, caractérisé en ce que l'élément présentant une faible résistance thermique forme un dispositif de fixation sous forme d'un collier (11) ou d'un élément de serrage (12), qui entoure tant le tiroir (8) que le dispositif de chauffage (4) dans une région de son extension longitudinale avec un matériau d'une résistance thermique plus faible.

4. Agencement de vanne thermostatique selon l'une quelconque des revendications précédentes, caractérisé en ce que les axes longitudinaux du tiroir (8) et du dispositif de chauffage (4) sont dirigés sensiblement parallèlement l'un à l'autre et/ou en ce que le dispositif de chauffage est réalisé de façon symétrique par rapport à une surface dirigée radialement par rapport au tiroir.

5. Agencement de vanne thermostatique selon l'une quelconque des revendications précédentes, caractérisé en ce que l'élément (12) présentant une faible résistance thermique présente une barrette (15) qui est pourvue en particulier d'une fente (16) s'étendant sensiblement en direction longitudinale.

6. Agencement de vanne thermostatique selon l'une quelconque des revendications précédentes, caractérisé en ce qu'une première ouverture de passage (18) d'une première région (13) de l'élément de serrage (12) est traversée par le tiroir (8), et en ce que dans une seconde ouverture de passage (19) d'une seconde région (14) de l'élément de serrage (12) est agencé un élément de chauffage (10) du dispositif de chauffage (4).

7. Agencement de vanne thermostatique selon l'une quelconque des revendications précédentes, caractérisé en ce que le tiroir (8) pénètre dans l'élément de travail (3).

8. Agencement de vanne thermostatique selon l'une quelconque des revendications précédentes, caractérisé en ce que le dispositif de chauffage électrique (4) présente un élément de chauffage (10) qui est constitué en un matériau dont la résistance électrique présente un coefficient de température positif.

9. Agencement de vanne thermostatique selon l'une quelconque des revendications précédentes, caractérisé en ce que le dispositif de chauffage (4) présente une ou plusieurs couches d'un fil de résistance qui est pourvu en particulier sur sa surface d'une mince couche d'isolation.

10. Agencement de vanne thermostatique selon l'une quelconque des revendications précédentes, caractérisé en ce que le dispositif de chauffage (4) est réalisé sous forme d'un élément de résistance (20) pourvu d'une couche superficielle isolante, comportant deux fils de raccordement pour l'utilisation dans des circuits électriques, et en ce qu'il est réalisé en particulier sous forme d'un élément de résistance présentant un support en céramique.

11. Agencement de vanne thermostatique selon l'une quelconque des revendications précédentes, caractérisé en ce que le tiroir (8) est constitué, dans la région entre l'élément de travail (3) et le dispositif de chauffage électrique (4), en un matériau à bonne conduction thermique, et en particulier dans son autre région en un matériau à mauvaise conduction thermique, en particulier en matière plastique.
